# EUROPEAN PATENT SPECIFICATION

(11) **EP 4 023 557 B1**
(45) Date of publication and mention of the grant of the patent: **18.09.2024**
(21) Application number: 20954322.2
(22) Date of filing: 10.12.2020
(51) Int. Cl.: B64C 39/08, B64D 31/06, B64D 27/24, B64C 29/00

(54) **AIRCRAFT**
FLUGZEUG
AÉRONEF

(30) Priority: 21.10.2020 CN 202011133900
(43) Date of publication of application: 06.07.2022
(73) Proprietor: Comac Beijing Aircraft Technology Research Institute, Beijing 102211 (CN); Commercial Aircraft Corporation of China, Ltd, Shanghai 200131 (CN)
(72) Inventor: LI, Hongliang, Beijing 102211 (CN); KANG, Yuanli, Beijing 102211 (CN); HUI, Yannian, Beijing 102211 (CN)
(74) Representative: Gille Hrabal Partnerschaftsgesellschaft mbB Patentanwälte
(86) International application number: PCT/CN2020/135370
(87) International publication number: WO 2022/082962

(56) References cited:
- CN-A- 106 586 001
- CN-A- 108 163 191
- CN-A- 108 163 191
- CN-A- 108 528 706
- CN-A- 109 747 819
- CN-A- 109 747 819
- CN-A- 109 911 194
- CN-A- 109 911 194
- CN-U- 206 561 946
- CN-U- 206 561 946
- US-A1- 2010 072 325
- US-A1- 2017 203 839
- US-A1- 2018 141 672

## Description

### TECHNICAL FIELD

The present disclosure relates to the field of aviation electric systems, and in particular, to an aircraft propulsion system.

### BACKGROUND

"Green" aviation has always been a key research subject in the field of aircraft manufacturing. At present, potential of traditional aircrafts fueled by aviation kerosene is rather limited in both emission reduction and noise reduction. Novel solutions must be sought to achieve goals of energy saving and emission reduction in the aviation field. In order to implement electrification of aircrafts, it is necessary to study a layout of electric propulsion systems from a perspective of overall design, explore novel layouts for future electrified aircrafts, improve the efficiency of propulsion systems, and reduce energy consumption. Therefore, there is an urgent need for a propulsion system for an electrified aircraft, which has an improved efficiency and can reduce energy consumption. US 2018/141672 discloses an aircraft belonging to the prior art.

### SUMMARY

An aircraft is provided according to claim 1.

In an embodiment, in a case that the aircraft control instruction is an instruction for level flight, the target operation mode is an operation mode of level flight, and the rotatable power unit is configured to adjust the propelling directions of all thrusters in the rotatable power unit to be the horizontal direction and adjust the operation state of all the thrusters in the rotatable power unit to be the active state; and the fixed power unit is configured to adjust the operation states of all thrusters in the fixed power unit to be the active state.

In an embodiment, the first rotatable power unit, the second rotatable power unit, the third rotatable power unit, and the fourth rotatable power unit are centra symmetrically disposed on the wings of the aircraft.

In an embodiment, in a case that the aircraft control instruction is a yawing instruction: the target operation mode is a yawing mode, where the yawing instruction includes a yaw angle and a yaw direction, and/or the aircraft has no vertical fin; the control apparatus is configured to determine a motor speed corresponding to each thruster in the third rotatable power unit and a motor speed corresponding to each thruster in the fourth rotatable power unit according to the yaw angle and the yaw direction, notify the third rotatable power unit of the motor speed corresponding to each thruster in the third rotatable power unit, and notify the fourth rotatable power unit of the motor speed corresponding to each thruster in the fourth rotatable power unit; the third rotatable power unit is configured to control a motor of each thruster in the third rotatable power unit according to the motor speed corresponding to said thruster in the third rotatable power unit; and the fourth rotatable power unit is configured to control a motor of each thruster in the fourth rotatable power unit according to the motor speeds corresponding to said thruster in the fourth rotatable power unit.

In an embodiment, each thruster comprises a motor and a propeller, and/or each thruster is integrated on one of the wings of the aircraft.

In an embodiment, the motor is a shaftless propulsion motor, and/or the motor is integrated with the propeller.

The control apparatus is configured to notify the rotatable power unit and the fixed power unit of the target operation mode according to the aircraft control instruction. The rotatable power unit is configured to adjust the propelling directions and the operation states of all thrusters in the rotatable power unit according to the target operation mode. The fixed power unit is configured to adjust the operation states of all thrusters in the fixed power unit according to the target operation mode. It can be seen that according to embodiments of the present disclosure, the rotatable power unit can make different adjustments on the propelling directions and the operation states of all thrusters therein according to different target operation modes, so that the rotatable power unit can thrust the aircraft in landing as well as level flight and cruise. Thereby, the vertical propulsion power system (that is, the rotatable power unit) in the aircraft propulsion system can be further used when the aircraft is in level flight or cruise, and hence can coordinate with the fixed power unit to provide thrust for the aircraft cruising in a level fight. Hence, there is no power deadweight in the aircraft control system, a weight of the aircraft is reduced, and flight control of the aircraft is optimized. Utilization efficiency of the overall power system is improved in the aircraft. Moreover, the distributed layout of the rotatable power unit and the fixed power unit in embodiments of the present disclosure improves a fault tolerance of the power system and ensures safety of the aircraft.

Hereinafter the above implementations, which are preferable and non-conventional, would be illustrated in conjunction with specific embodiments.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic structural diagram of an aircraft according to an embodiment of the present disclosure.
Figure 2 is a schematic structural diagram of an aircraft according to another embodiment of the present disclosure.
Figure 3 is a schematic structural diagram of an aircraft according to another embodiment of the present disclosure.
Figure 4 is a schematic structural diagram of a thruster according to an embodiment of the present disclosure.

### DETAILED DESCRIPTION OF THE EMBODIMENTS

In order to clarify the objectives, technical solutions, and advantages of the present disclosure, hereinafter technical solutions in the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Hereinafter various non-limiting embodiments of the present disclosure would be described in detail in conjunction with the drawings.

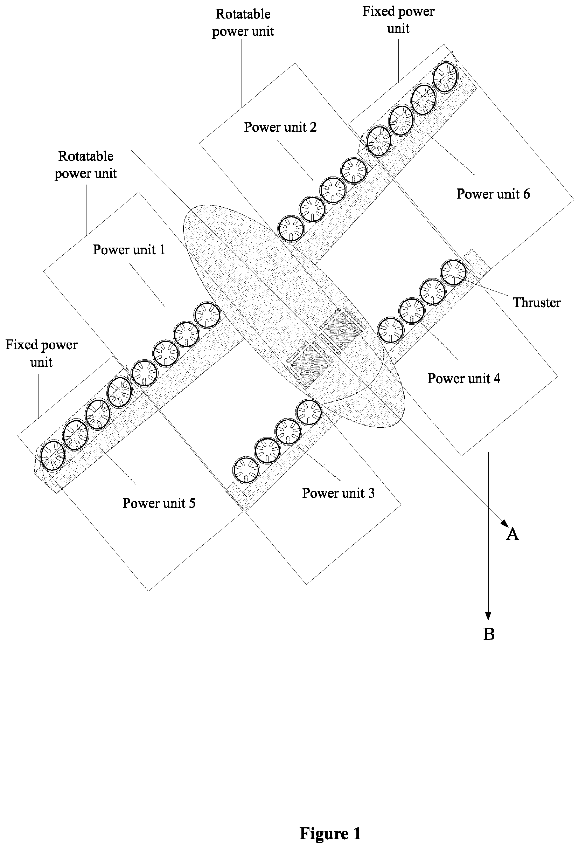

Reference is made to Figure 1, which is an aircraft according to an embodiment of the present disclosure. The aircraft may be an electrified aircraft. The aircraft may comprise: a control apparatus (not depicted), a rotatable power unit, and a stationary power unit. The rotatable power unit may comprise multiple thrusters, and the fixed power unit may comprise other multiple thrusters. It should be noted that a quantity of thrusters in the rotatable power unit and a quantity of thrusters in the fixed power unit may be determined based on an actual requirement. The quantity of thrusters in the rotatable power unit may be identical to or different from that in the fixed power unit. In addition, both the rotatable power unit and the fixed power unit are symmetrically disposed on wings located at two sides of the aircraft. It should be noted that quantities of thrusters in the rotatable power unit may be identical or different on the wings at two sides of the aircraft, and quantities of thrusters in the fixed power unit may be identical or different on the wings at two sides of the aircraft.

The control apparatus is configured to notify the rotatable power unit and the fixed power unit of a target operation mode according to an aircraft control instruction. The aircraft control instruction may refer to an instruction that is inputted by a user via the terminal to control operation of the aircraft. In an embodiment, the aircraft control instruction may include an instruction for vertical take-off and landing, an instruction for level flight, and a yawing instruction. It should be noted that the instruction for vertical take-off and landing is configured to control vertical take-off or vertical landing of the aircraft, and the instruction for level flight is configured to control the aircraft to cruise in the air (that is, perform level flight) after climbing to a certain height. The yawing instruction may be configured to control the aircraft to yaw in the air.

In a case that the aircraft control command received by the control apparatus is the instruction for vertical take-off and landing, the control apparatus notifies the rotatable power unit and the fixed power unit of the target operation mode which is an operation mode of vertical take-off and landing. In a case that the aircraft control command received by the control apparatus is the instruction for level flight, the control apparatus may notify the rotatable power unit and the fixed power unit of the target operation mode which is an operation mode of level flight. In a case that the aircraft control command received by the control apparatus is the yawing instruction, the control apparatus may notify the rotatable power unit and the fixed power unit of the target operation mode which is a yawing mode.

The fixed power unit is configured to adjust operation states of all thrusters in the fixed power unit according to the target operation mode. Propelling directions of all thrusters in the fixed power unit are fixed to be a horizontal direction. It can be understood that in this embodiment, all thrusters in the fixed power unit cannot be rotated to another direction. The fixed power unit is capable to provide thrust only along the horizontal direction for the aircraft. The horizontal direction is a lengthwise direction of a fuselage of the aircraft, for example, may be direction A pointing toward a tail of the aircraft as shown in Figure 1. It can be appreciated that a fixed power unit may be configured to provide thrust along the horizontal direction for the aircraft. It should be noted that the operation state of a thruster may be either an active state or an inactive state. In case of the active state, the thruster can provide thrust to facilitate the aircraft moving forward. In case of the inactive state, the thruster stops providing the thrust.

The rotatable power unit is configured to adjust the propelling directions and operation states of all thrusters in the rotatable power unit according to the target operation mode. It should be noted that in this embodiment, all thrusters in the rotatable power unit can be rotated toward various directions, that is, the rotatable power unit may provide thrust along multiple directions for the aircraft. Hence, the rotatable power unit can make different adjustments on the propelling directions and the operation states of all thrusters in the rotatable power unit according to different target operation modes. Thereby, the rotatable power unit can provide thrust for the aircraft regardless whether the aircraft performs vertical take-off and landing or performs level flight or cruising in the air. Accordingly, when the aircraft performs level flight or cruise, the vertical propulsion power system (that is, the rotatable power unit) in the aircraft propulsion system can be further used and provide thrust in coordination with the fixed power unit. There is no power deadweight in the aircraft control system, a weight of the aircraft is reduced, flight control of the aircraft is optimized, and hence utilization efficiency of an overall power system is improved for the aircraft. The rotatable power unit and the fixed power unit according to embodiments of the present disclosure adopt a distributed layout, which improves a fault tolerance of the power system and ensures safety of the aircraft.

As shown in Figure 1, the rotatable power unit includes a first rotatable power unit (i.e., the power unit 1 in Figure 1), a second rotatable power unit (i.e., the power unit 2 in Figure 1), a third rotatable power unit (i.e., the power unit 3 in Figure 1) and a fourth rotatable power unit (i.e., the power unit 4 in Figure 1). The fixed power unit includes a first fixed power unit (i.e., the power unit 5 in Figure 1) and a second fixed power unit (i.e., the power unit 6 in Figure 1). The first rotatable power unit, the second rotatable power unit, the third rotatable power unit, and the fourth rotatable power unit may be symmetrically distributed on the wings of the aircraft, or may be centrosymmetrically distributed. It should be noted that quantities of thrusters in the first rotatable power unit, the second rotatable power unit, the third rotatable power unit, and the fourth rotatable power unit may be identical (for example, there are four thrusters in each unit) or different, which is not limited herein. Quantities of thrusters in the first fixed power unit and the second fixed power unit may be identical (for example, here are four thrusters in each unit) or different, which is not limited herein.

As shown in Figure 1, the aircraft includes a left front wing, a right front wing, a left rear wing, and a right rear wing. The first rotatable power unit is disposed on a proximal part of the right rear wing, and the first fixed power unit is disposed on a distal part of the right rear wing. The second rotatable power unit is disposed on a proximal part of the left rear wing, and the second fixed power unit is disposed on a distal part of the left rear wing. The third rotatable power unit is disposed on the right front wing. The fourth rotatable power unit is disposed on the left front wing.

Hereinafter operations of the rotatable power unit and the fixed power unit would be introduced when the target operation mode is the operation mode of vertical take-off and landing, the operation mode of level flight, and the yawing mode, respectively.

First, it is introduced that the target operation mode is the operation mode of vertical take-off and landing when the aircraft control instruction is the instruction for vertical take-off and landing.

When the target operation mode is the operation mode of vertical take-off and landing, the rotatable power unit is specifically configured to adjust the propelling directions of all thrusters in the rotatable power unit to be a vertical direction, and adjust the operation states of all thruster in the rotatable power unit to be the active state. The vertical direction is perpendicular to the lengthwise direction of the fuselage of the aircraft and points to the ground. For example, as shown in Figure 1, the vertical direction may be direction B that is perpendicular to the lengthwise direction of the fuselage of the aircraft and perpendicular to the ground. That is, when the target operation mode is the operation mode of vertical take-off and landing, the rotatable power unit is capable to provide thrust along the vertical direction (i.e., the direction perpendicular to the ground) for the aircraft, so that the aircraft can take off or land vertically. In this embodiment, when the rotatable power unit is notified of the operation mode of vertical take-off and landing, the rotatable power unit may first control all thrusters in the rotatable power unit to rotate all thrusters in the rotatable power unit, until the propelling directions of all thrusters in the rotatable power unit is along the vertical direction. Then, the rotatable power unit may control the operation states of all thrusters in the rotatable power unit to be the active state, so that all thrusters in the rotatable power unit start to provide thrust for the aircraft.

When the target operation mode is the operation mode of vertical take-off and landing, the fixed power unit is configured to to adjust the operation states of all thrusters in the fixed power unit to be the inactive state. Hence, when the target operation mode is the operation mode of vertical take-off and landing, the fixed power unit would not provide any thrust, that is, the fixed power unit will not work does not operation during both vertical take-off and vertical landing of the aircraft.

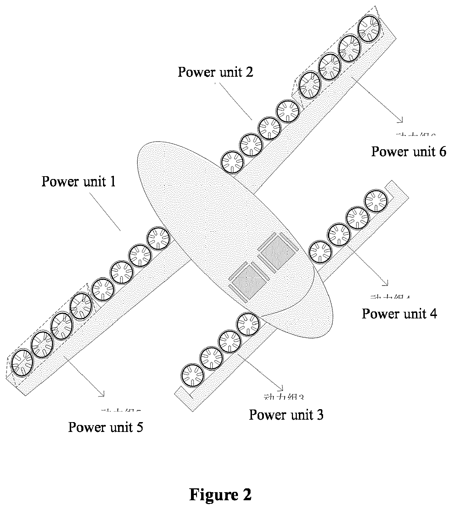

Reference is made to Figure 2 as an example. As shown in Figure 2, when the target operation mode is the operation mode of vertical take-off and landing, the propelling directions of all thrusters in the rotatable power unit (i.e., power unit 1, power unit 2, power unit 3, and power unit 4) are adjusted to be the vertical direction, and the operation states of these power units are switched to be the active state. That is, trailing edges of the wings provided with power units 1 to 4 are folded and point downward, such that the four power units (i.e., power units 1 to 4) are switched to a vertical attitude, and the aircraft enters a multi-rotor mode. In such mode, these four power units provide vertical thrust for vertical take-off or vertical landing, while the propelling directions of all thrusters in the fixed power units (i.e., power unit 5 and power unit 6) are still fixed to be the horizontal direction, pointing toward a tail of the aircraft.

Next, it is introduced that the target operation mode is the operation mode of level flight when the aircraft control instruction is the instruction for level flight.

When the target operation mode is the operation mode of level flight, the rotatable power unit is specifically configured to adjust the propelling directions of all thrusters in the rotatable power unit to be the horizontal direction, and adjust the operation states of all thrusters in the rotatable power unit to be the active state. That is, when the target operation mode is the operation mode of level flight, the rotatable power unit can provide thrust along the horizontal direction (for example, towards the tail of the aircraft) for the aircraft, so that the aircraft can have more power for cruising.

When the target operation mode is the operation mode of level flight, the fixed power unit is specifically configured to adjust the operation states of all thrusters in the fixed power unit to be the active state. That is, when a state of the aircraft has been switched to level flight, the fixed power unit can provide thrust along the horizontal direction (for example, toward the tail of the aircraft) for the aircraft, so that the aircraft can have adequate power for cruising.

It should be noted that in this embodiment, after the aircraft takes off and climbs to a specified height, the fixed power unit starts to operate (that is, an operation state of the fixed power unit is switched to be the active state) to provide thrust along the horizontal direction, and the rotatable power unit starts to match the operation state of the fixed power unit. The operation state of the rotatable power unit may be first adjusted to the inactive state (that is, the rotatable power unit stops operation first), and the propelling directions of all thrusters in the rotatable power unit are adjusted. That is, in a case that fixed power unit provides adequate cruising power, the rotatable power unit stops operation first. After the propelling directions of all thrusters in the rotatable power unit are rotated to the horizontal direction, the operation states of all thrusters in the rotatable power unit are switched to the active state, so that the rotatable power unit coordinates with the fixed power unit to provide power for the aircraft. At such time, the aircraft switches from the rotor mode to a fixed-wing mode. That is, the rotatable power unit and the fixed power unit together provide thrust for the aircraft during a fixed-wing cruise.

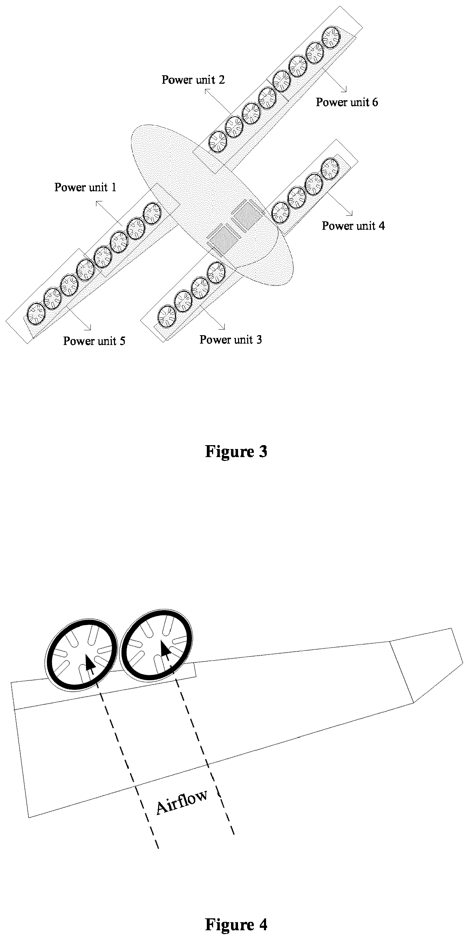

Reference is made to Figure 3 as an example. As shown in Figure 3, when the target operation mode is the operation mode of level flight, the operation state of the fixed power unit (i.e., power unit 5 and power unit 6) is switched to the active state after the aircraft takes off and climbs to the specified height, so as to provide thrust along the horizontal direction. When the fixed power unit provides adequate cruising power, the rotatable power unit (i.e., power unit 1, power unit 2, power unit 3, and power unit 4) stops operation first. All thrusters in the power unit 1, power unit 2, power unit group 3, and power unit 4 are rotated to the horizontal direction, and then the operation states of all thrusters of power unit 1, power unit 2, power unit 3, and power unit 4 are switched to the active state. Thereby, power unit 1, power unit 2, power unit 3, and power unit 4 coordinate with power unit 5 and power unit 6 to provide power for the aircraft. At such time, the aircraft switches from rotor mode to the fixed-wing mode. That is, the rotatable power unit and the fixed power unit together provide thrust for the aircraft during the fixed-wing cruise.

Hence, multiple power units are distributed along the wings of the aircraft according to embodiments of the present disclosure. A part of the power units (i.e., the rotatable power unit) is for vertical take-off and landing, and another part (i.e., the fixed power unit) of the power units is for cruising and level flight. The power unit for vertical take-off and landing (i.e., the rotatable power unit) adopts a tilt-rotor scheme. During switching a flying state (that is, when the state of the aircraft is switched from vertical take-off or landing to level flight, i.e., fixed-wing), a hybrid-wing scheme is adopted for control. After the switching is completed, the power unit for vertical take-off and landing (i.e., the rotatable power unit) becomes horizontal (i.e., the propelling direction is adjusted to the horizontal direction), and operates in coordination with the cruising power unit (i.e., the fixed power unit) to provide thrust for the aircraft. The above scheme optimizes the flight control, and there is no power deadweight, which reduces a weight of the aircraft and improves utilization efficiency of the overall power system. Moreover, the distributed layout is adopted to improve a fault tolerance of the power system and ensure safety of the aircraft. It can be appreciated that the present disclosure adopts the hybrid-wing scheme in aircraft control, and adopts the tilt-rotor scheme for power devices of the aircraft.

Next, it is introduced that the target operating mode is a yawing mode when the aircraft control instruction is a yawing instruction. It should be noted that pitching and banking can also be implemented based on this embodiment, and are not described herein for conciseness.

It should be noted that in an embodiment, the aircraft to which the aircraft propulsion system is applied is free of a vertical fin, in order to reduce a weight of the aircraft and resistance on the aircraft. That is, the aircraft does not have a vertical fin. In order to achieve yawing of the aircraft, motor speeds of the rotatable power units on the wings at two sides of the aircraft may be adjusted. Yawing of the aircraft is implemented based on a difference between motor speeds of the rotatable power units on the wings at two sides. That is, in an embodiment, there is no vertical fin on the aircraft, and steering of the aircraft is controlled by the power system (such as the rotatable power unit) of the aircraft.

Reference is made to Figure 1 as an example. The control apparatus may be specifically configured to determine a motor speed corresponding to each thruster in the third rotatable power unit (i.e., the power unit 3 as shown in Figure 1) and a motor speed corresponding to each thruster in the fourth rotatable power unit (i.e., the power unit 4 as shown in Figure 1) according to a yaw angle and a yaw direction. The control apparatus may be further configured to notify the third rotatable power unit of the motor speed corresponding to each thruster in the third rotatable power units, and notify the fourth rotatable power unit of the motor speed corresponding to each thruster in the fourth rotatable power unit. For example, when the aircraft needs to turn left, the motor speed corresponding to each thruster in the third rotatable power unit may be higher than that corresponding to each thruster in the fourth rotatable power unit. For example, when the aircraft needs to turn right, the motor speed corresponding to each thruster in the third rotatable power unit may be lower than that corresponding to each thruster in the fourth rotatable power unit. The third rotatable power unit may be configured to control a motor of each thruster in the third rotatable power unit according to the motor speed corresponding to such thruster. That is, the third rotatable power unit controls an operation state (for example, a speed) of a motor of each thruster in the third rotatable power unit according to the motor speed corresponding to such thruster. The fourth rotatable power unit may be configured to control a motor of each thruster in the fourth rotatable power unit according to the motor speed corresponding to such thruster. That is, the fourth rotatable power unit controls an operation state (for example, a speed) of a motor of each thruster in the fourth rotatable power unit according to the motor speed corresponding to such thruster. That is, when there is no vertical fin on the aircraft, the yawing can be performed through adjusting the motor speeds of power unit 3 and power unit 4. Hence, yaw control of the aircraft can be achieve based on a difference in the motor speed between power unit 3 and power unit 4, which further reduces a weight of the aircraft and resistance on the aircraft.

Hereinabove introduced are operation of the rotatable power unit and the fixed power unit when the target operation mode is the operation mode of vertical take-off and landing, the operation mode of level flight, and the yawing mode. Hereinafter a structure of the thruster in embodiments of the present disclosure would be introduced.

In an embodiment, each thruster in the rotatable power unit and the fixed power unit may be disposed on a lengthwise edge of the wing, and the edge faces the tail. Each thruster may comprise a motor and a propeller. Hence, solutions of the present disclosure are advantageous in that a power of the aircraft propulsion system is approximately irrelevant to its size. The power system has a distributed layout using multiple small distributed motors, which simplifies an energy structure and improves freedom of controlling the thrusters in each power unit. It should be noted that in an embodiment, the motor and the propeller in each thruster may be designed as an integral, so as to improve stability of connection between the motor and the propeller in the thruster.

In an embodiment, each thruster may be integrated on a wing of the aircraft, so that the stability of connection between the thrusters and the wings can be improved.

In an embodiment, the motor in each thruster may be a shaftless propulsion motor. That is, a shaftless rim propulsion scheme may be adopted in embodiments of the present disclosure (that is, air may flow through the middle of the thruster). The shaftless propulsion motor and the propeller may be designed as an integral, and a power device (i.e., each thruster) is disposed at an upper edge of the wing. Such structure is more flexible to install, and the air is allowed to flow through an inner part of the thruster. In one aspect, it can enhance heat dissipation of the motor and improve power density of the motor. In another aspect, it improves an aerodynamic performance and efficiency of the wings.

For example, the power system (i.e., the rotatable power unit and the fixed power unit) in embodiments of the present disclosure may be provided with a ducted fan and adopt shaftless rim propulsion. Thereby, the boundary layer ingesting (BLI) technology is utilized to further improve cruise efficiency of the aircraft.

It should be noted that the embodiments of the present disclosure are described in a progressive manner, and each embodiment places emphasis on the difference from other embodiments. Therefore, one embodiment may refer to other embodiments for the same or similar parts. The apparatus and system embodiments described above are merely illustrative, and the units described as separate components may or may not be physically separate. Some or all of the modules may be selected according to an actual requirement to achieve a purpose of a solution in embodiments of the present disclosure, which those skilled in the art can understand and implement without creative efforts.

What described above is only preferrable embodiments of the present invention, and the protection scope of the present disclosure is not limited thereto. Any modification or substitution easily made by a person skilled in the art without deviating from the technical scope disclosed in the present disclosure shall fall within the protection scope of the present disclosure. Therefore, the protection scope of the present disclosure should be subject to the protection scope of the claims.

## Claims

1. An aircraft with a left front wing, a right front wing, a left rear wing, and a right rear wing, as well as an aircraft propulsion system, comprising:
a control apparatus, a rotatable power unit (1, 2, 3, 4), and a fixed power unit (5, 6), wherein:
the rotatable power unit (1,2, 3, 4) comprises a first rotatable power unit (1, 2, 3, 4), a second rotatable power unit (1, 2, 3, 4), a third rotatable power unit (1,2, 3, 4), and a fourth rotatable power unit (1, 2, 3, 4), and the fixed power unit (5, 6) comprises a first fixed power unit (5, 6) and a second fixed power unit (5, 6); wherein each of the rotatable power units (1, 2, 3, 4) comprises multiple thrusters, each of the fixed power units (5, 6) comprises other multiple thrusters, and both the rotatable power unit (1, 2, 3, 4) and the fixed power unit (5, 6) are symmetrically disposed on the wings which are at two sides of the aircraft;
the control apparatus is configured to notify the rotatable power unit (1, 2, 3, 4) and the fixed power unit (5, 6) of a target operation mode according to an aircraft control instruction;
the rotatable power unit (1, 2, 3, 4) is configured to adjust propelling directions and operation states of all thrusters in the rotatable power unit (1, 2, 3, 4) according to the target operation mode; and
the fixed power unit (5, 6) is configured to adjust operation states of all thrusters in the fixed power unit (5, 6) according to the target operation mode,
wherein in a case that the aircraft control instruction is an instruction for vertical take-off and landing:
the target operation mode is an operation mode of vertical take-off and landing, and
the rotatable power unit (1, 2, 3, 4) is configured to adjust the propelling directions of all thrusters in the rotatable power unit (1, 2, 3, 4) to be a vertical direction and adjust the operation states of all thrusters in the rotatable power unit (1, 2, 3, 4) to be an active state, wherein the vertical direction is perpendicular to the lengthwise direction of the fuselage of the aircraft and points toward ground;
wherein propelling directions of all thrusters in the fixed power unit (5, 6) are fixed to be a horizontal direction, and the horizontal direction is along a lengthwise direction of a fuselage of the aircraft;
wherein in the case that the target operation mode is the operation mode of vertical take-off and landing, the fixed power units (5, 6) are configured to adjust the operation states of all thrusters in the fixed power units (5, 6) to an inactive state; wherein
the right and left rear wings consist of a distal part and a proximal part, wherein the distal part of the right rear wing only has the first fixed power unit (5, 6) disposed thereon and the distal part of the left rear wing only has the second fixed power unit (5, 6) disposed thereon, while the first rotatable power unit (1, 2, 3, 4) is disposed on the proximal part of the right rear wing, the second rotatable power unit (1, 2, 3, 4) is disposed on the proximal part of the left rear wing, the third rotatable power unit (1, 2, 3, 4) is disposed on the right front wing, and the fourth rotatable power unit (1, 2, 3, 4) is disposed on the left front wing.

2. The aircraft according to claim 1, wherein in a case that the aircraft control instruction is an instruction for level flight:
the target operation mode is an operation mode of level flight;
the rotatable power unit (1, 2, 3, 4) is configured to adjust the propelling directions of all thrusters in the rotatable power unit (1, 2, 3, 4) to be the horizontal direction and adjust the operation state of all the thrusters in the rotatable power unit (1, 2, 3, 4) to be the active state; and
the fixed power unit (5, 6) is configured to adjust the operation states of all thrusters in the fixed power unit (5, 6) to be the active state.

3. The aircraft of claim 1, wherein the first rotatable power unit (1, 2, 3, 4), the second rotatable power unit (1, 2, 3, 4), the third rotatable power unit (1, 2, 3, 4), and the fourth rotatable power unit (1, 2, 3, 4) are centrosymmetrically disposed on the wings of the aircraft.

4. The aircraft according to claim 1, wherein in a case that the aircraft control instruction is a yawing instruction:
the target operation mode is a yawing mode, wherein the yawing instruction comprises a yaw angle and a yaw direction, and/or the aircraft has no vertical fin;
the control apparatus is configured to:
determine a motor speed corresponding to each thruster in the third rotatable power unit (1, 2, 3, 4) and a motor speed corresponding to each thruster in the fourth rotatable power unit (1, 2, 3, 4) according to the yaw angle and the yaw direction,
notify the third rotatable power unit (1, 2, 3, 4) of the motor speed corresponding to each thruster in the third rotatable power unit (1, 2, 3, 4), and
notify the fourth rotatable power unit (1, 2, 3, 4) of the motor speed corresponding to each thruster in the fourth rotatable power unit (1, 2, 3, 4);
the third rotatable power unit (1, 2, 3, 4) is configured to control a motor of each thruster in the third rotatable power unit (1, 2, 3, 4) according to the motor speed corresponding to said thruster in the third rotatable power unit (1, 2, 3, 4); and
the fourth rotatable power unit (1, 2, 3, 4) is configured to control a motor of each thruster in the fourth rotatable power unit (1, 2, 3, 4) according to the motor speeds corresponding to said thruster in the fourth rotatable power unit (1, 2, 3, 4).

5. The aircraft according to any one of claims 1 to 2, wherein each thruster comprises a motor and a propeller, and/or each thruster is integrated on one of the wings of the aircraft.

6. The aircraft according to claim 5, wherein the motor is a shaftless propulsion motor, and/or the motor is integrated with the propeller.

## Patentansprüche

1. Ein Flugzeug mit einem linken Frontflügel, einem rechten Frontflügel, einem linken Heckflügel und einem rechten Heckflügel, sowie einem Flugzeugantriebssystem, umfassend:
ein Steuerungsgerät, eine drehbare Antriebseinheit (1, 2, 3, 4) und eine feste Antriebseinheit (5, 6), wobei:
die drehbare Antriebseinheit (1, 2, 3, 4) eine erste drehbare Antriebseinheit (1, 2, 3, 4), eine zweite drehbare Antriebseinheit (1, 2, 3, 4), eine dritte drehbare Antriebseinheit (1, 2, 3, 4) und eine vierte drehbare Antriebseinheit (1, 2, 3, 4) umfasst, und die feste Antriebseinheit (5, 6) eine erste feste Antriebseinheit (5, 6) und eine zweite feste Antriebseinheit (5, 6) umfasst; wobei jede der drehbaren Antriebseinheiten (1, 2, 3, 4) mehrere Triebwerke umfasst, jede der festen Antriebseinheiten (5, 6) weitere mehrere Triebwerke umfasst und sowohl die drehbare Antriebseinheit (1, 2, 3, 4) als auch die feste Antriebseinheit (5, 6) symmetrisch auf den Flügeln angeordnet sind, die sich an zwei Seiten des Flugzeugs befinden;
das Steuerungsgerät dazu eingerichtet ist, der drehbaren Antriebseinheit (1, 2, 3, 4) und der festen Antriebseinheit (5, 6) einen Zielbetriebsmodus gemäß einer Flugzeugsteueranweisung mitzuteilen;
die drehbare Antriebseinheit (1, 2, 3, 4) dazu eingerichtet ist, Antriebsrichtungen und Betriebszustände aller Triebwerke in der drehbaren Antriebseinheit (1, 2, 3, 4) gemäß dem Zielbetriebsmodus einzustellen; und
die feste Antriebseinheit (5, 6) dazu eingerichtet ist, Betriebszustände aller Triebwerke in der festen Antriebseinheit (5, 6) gemäß dem Zielbetriebsmodus einzustellen;
wobei in einem Fall, in dem die Flugzeugsteueranweisung eine Anweisung für vertikales Starten und Landen ist:
der Zielbetriebsmodus ein Betriebsmodus für vertikales Starten und Landen ist, und
die drehbare Antriebseinheit (1, 2, 3, 4) dazu eingerichtet ist, die Antriebsrichtungen aller Triebwerke in der drehbaren Antriebseinheit (1, 2, 3, 4) so einzustellen, dass sie eine vertikale Richtung sind, und die Betriebszustände aller Triebwerke in der drehbaren Antriebseinheit (1, 2, 3, 4) so einzustellen, dass sie ein aktiver Zustand sind, wobei die vertikale Richtung senkrecht zu der Längsrichtung des Rumpfes des Flugzeugs ist und zum Boden zeigt;
wobei Antriebsrichtungen aller Triebwerke in der festen Antriebseinheit (5, 6) so festgelegt sind, dass sie eine horizontale Richtung sind, und die horizontale Richtung entlang einer Längsrichtung eines Rumpfes des Flugzeugs verläuft;
wobei in dem Fall, dass der Zielbetriebsmodus der Betriebsmodus des vertikalen Startens und Landens ist, die festen Antriebseinheiten (5, 6) dazu eingerichtet sind, die Betriebszustände aller Triebwerke in den festen Antriebseinheiten (5, 6) auf einen inaktiven Zustand einzustellen; wobei
der rechte und der linke Heckflügel aus einem distalen Teil und einem proximalen Teil bestehen, wobei an dem distalen Teil des rechten Heckflügels nur die erste feste Antriebseinheit (5, 6) angeordnet ist und an dem distalen Teil des linken Heckflügels nur die zweite feste Antriebseinheit (5, 6) angeordnet ist, während die erste drehbare Antriebseinheit (1, 2, 3, 4) am proximalen Teil des rechten Heckflügels angeordnet ist, die zweite drehbare Antriebseinheit (1, 2, 3, 4) am proximalen Teil des linken Heckflügels angeordnet ist, die dritte drehbare Antriebseinheit (1, 2, 3, 4) am rechten Frontflügel angeordnet ist und die vierte drehbare Antriebseinheit (1, 2, 3, 4) am linken Frontflügel angeordnet ist.

2. Das Flugzeug gemäß Anspruch 1, wobei in einem Fall, in dem die Flugzeugsteueranweisung eine Anweisung für den Horizontalflug ist:
der Zielbetriebsmodus ein Betriebsmodus für den Horizontalflug ist;
die drehbare Antriebseinheit (1, 2, 3, 4) dazu eingerichtet ist, die Antriebsrichtungen aller Triebwerke in der drehbaren Antriebseinheit (1, 2, 3, 4) auf die horizontale Richtung einzustellen und den Betriebszustand aller Triebwerke in der drehbaren Antriebseinheit (1, 2, 3, 4) auf den aktiven Zustand einzustellen; und
die feste Antriebseinheit (5, 6) dazu eingerichtet ist, die Betriebszustände aller Triebwerke in der festen Antriebseinheit (5, 6) auf den aktiven Zustand einzustellen.

3. Das Flugzeug nach Anspruch 1, wobei die erste drehbare Antriebseinheit (1, 2, 3, 4), die zweite drehbare Antriebseinheit (1, 2, 3, 4), die dritte drehbare Antriebseinheit (1, 2, 3, 4) und die vierte drehbare Antriebseinheit (1, 2, 3, 4) zentrosymmetrisch an den Flügeln des Flugzeugs angeordnet sind.

4. Das Flugzeug gemäß Anspruch 1, wobei in einem Fall, in dem die Flugzeugsteueranweisung eine Gieranweisung ist:
der Zielbetriebsmodus ein Giermodus ist, wobei die Gieranweisung einen Gierwinkel und eine Gierrichtung umfasst, und/oder das Flugzeug kein Seitenleitwerk aufweist;
das Steuerungsgerät dazu eingerichtet ist, um:
eine jedem Triebwerk in der dritten drehbaren Antriebseinheit (1, 2, 3, 4) entsprechende Motordrehzahl und eine jedem Triebwerk in der vierten drehbaren Antriebseinheit (1, 2, 3, 4) entsprechende Motordrehzahl gemäß dem Gierwinkel und der Gierrichtung zu bestimmen,
der dritten drehbaren Antriebseinheit (1, 2, 3, 4) die jedem Triebwerk in der dritten drehbaren Antriebseinheit (1, 2, 3, 4) entsprechende Motordrehzahl mitzuteilen, und
der vierten drehbaren Antriebseinheit (1, 2, 3, 4) die jedem Triebwerk in der vierten drehbaren Antriebseinheit (1, 2, 3, 4) entsprechende Motordrehzahl mitzuteilen;
die dritte drehbare Antriebseinheit (1, 2, 3, 4) ist dazu eingerichtet, einen Motor jedes Triebwerks in der dritten drehbaren Antriebseinheit (1, 2, 3, 4) gemäß der Motordrehzahl zu steuern, die dem Triebwerk in der dritten drehbaren Antriebseinheit (1, 2, 3, 4) entspricht; und die vierte drehbare Antriebseinheit (1, 2, 3, 4) ist dazu eingerichtet, einen Motor jedes Triebwerks in der vierten drehbaren Antriebseinheit (1, 2, 3, 4) gemäß den Motordrehzahlen zu steuern, die dem Triebwerk in der vierten drehbaren Antriebseinheit (1, 2, 3, 4) entsprechen.

5. Das Flugzeug gemäß einem der Ansprüche 1 bis 2, wobei jedes Triebwerk einen Motor und einen Propeller umfasst und/oder jedes Triebwerk an einem der Flügel des Flugzeugs integriert ist.

6. Das Flugzeug gemäß Anspruch 5, wobei der Motor ein wellenloser Antriebsmotor ist und/oder der Motor mit dem Propeller integriert ist.

## Revendications

1. Un aéronef avec une aile avant gauche, une aile avant droite, une aile arrière gauche et une aile arrière droite, ainsi qu'un système de propulsion d'aéronef, comprenant :
un appareil de contrôle, une unité de puissance rotative (1, 2, 3, 4), et une unité de puissance fixe (5, 6), dans lequel :
l'unité de puissance rotative (1, 2, 3, 4) comprend une première unité de puissance rotative (1, 2, 3, 4), une deuxième unité de puissance rotative (1, 2, 3, 4), une troisième unité de puissance rotative (1, 2, 3, 4), et une quatrième unité de puissance rotative (1, 2, 3, 4), et l'unité de puissance fixe (5, 6) comprend une première unité de puissance fixe (5, 6) et une deuxième unité de puissance fixe (5, 6) ; dans lequel chaque unité de puissance rotative (1, 2, 3, 4) comprend des propulseurs multiples, chaque unité de puissance fixe (5, 6) comprend d'autres propulseurs multiples, et l'unité de puissance rotative (1, 2, 3, 4) et l'unité de puissance fixe (5, 6) sont symétriquement disposées sur les ailes situées aux deux côtés de l'aéronef ;
l'appareil de contrôle est configuré pour notifier l'unité de puissance rotative (1, 2, 3, 4) et l'unité de puissance fixe (5, 6) d'un mode de fonctionnement cible en fonction d'une instruction de contrôle de l'aéronef ;
l'unité de puissance rotative (1, 2, 3, 4) est configurée pour ajuster des directions de propulsion et des états de fonctionnement de tous les propulseurs de l'unité de puissance rotative (1, 2, 3, 4) en fonction du mode de fonctionnement cible ; et
l'unité de puissance fixe (5, 6) est configurée pour ajuster des états de fonctionnement de tous les propulseurs de l'unité de puissance fixe (5, 6) en fonction du mode de fonctionnement cible ;
dans lequel, dans le cas où l'instruction de contrôle de l'aéronef est une instruction pour décollage et atterrissage verticaux :
le mode de fonctionnement cible est un mode de fonctionnement de décollage et d'atterrissage verticaux, et
l'unité de puissance rotative (1, 2, 3, 4) est configurée pour ajuster les directions de propulsion de tous les propulseurs dans l'unité de puissance rotative (1, 2, 3, 4) à être une direction verticale et pour ajuster les états de fonctionnement de tous les propulseurs de l'unité de puissance rotative (1, 2, 3, 4) à être un état actif, dans lequel la direction verticale est perpendiculaire à la direction longitudinale du fuselage de l'aéronef et pointe vers le sol ;
dans lequel les directions de propulsion de tous les propulseurs dans l'unité de puissance fixe (5, 6) sont fixées à être une direction horizontale, et la direction horizontale est le long de la direction longitudinale d'un fuselage de l'aéronef ;
dans lequel, dans le cas où le mode de fonctionnement cible est le mode de fonctionnement de décollage et d'atterrissage verticaux, les unités de puissance fixes (5, 6) sont configurées pour ajuster les états de fonctionnement de tous les propulseurs dans les unités de puissance fixes (5, 6) à un état inactif ; dans lequel
les ailes arrière droite et gauche sont constituées d'une partie distale et d'une partie proximale, dans lesquelles la partie distale de l'aile arrière droite n'a que la première unité de puissance fixe (5, 6) disposée sur celle-ci et la partie distale de l'aile arrière gauche n'a que la deuxième unité de puissance fixe (5, 6) disposée sur celle-ci, tandis que la première unité de puissance rotative (1, 2, 3, 4) est disposée sur la partie proximale de l'aile arrière droite, la deuxième unité de puissance rotative (1, 2, 3, 4) est disposée sur la partie proximale de l'aile arrière gauche, la troisième unité de puissance rotative (1, 2, 3, 4) est disposée sur l'aile avant droite, et la quatrième unité de puissance rotative (1, 2, 3, 4) est disposée sur l'aile avant gauche.

2. L'aéronef selon la revendication 1, dans lequel, dans le cas où l'instruction de contrôle de l'aéronef est une instruction pour vol en palier :
le mode de fonctionnement cible est un mode de fonctionnement de vol en palier
l'unité de puissance rotative (1, 2, 3, 4) est configurée pour ajuster les directions de propulsion de tous les propulseurs dans l'unité de puissance rotative (1, 2, 3, 4) à être la direction horizontale et ajuster l'état de fonctionnement de tous les propulseurs dans l'unité de puissance rotative (1, 2, 3, 4) à être l'état actif ; et
l'unité de puissance fixe (5, 6) est configurée pour ajuster les états de fonctionnement de tous les propulseurs dans l'unité de puissance fixe (5, 6) à être l'état actif.

3. L'aéronef de la revendication 1, dans lequel la première unité de puissance rotative (1, 2, 3, 4), la deuxième unité de puissance rotative (1, 2, 3, 4), la troisième unité de puissance rotative (1, 2, 3, 4) et la quatrième unité de puissance rotative (1, 2, 3, 4) sont disposées de manière centrosymétrique sur les ailes de l'aéronef.

4. L'aéronef selon la revendication 1, dans lequel dans le cas où l'instruction de contrôle de l'aéronef est une instruction de lacet :
le mode de fonctionnement cible est un mode de lacet, dans lequel l'instruction de lacet comprend un angle de lacet et une direction de lacet, et/ou l'aéronef n'a pas d'aileron vertical ;
l'appareil de contrôle est configuré pour :
déterminer une vitesse de moteur correspondant à chaque propulseur de la troisième unité de puissance rotative (1, 2, 3, 4) et une vitesse de moteur correspondant à chaque propulseur de la quatrième unité de puissance rotative (1, 2, 3, 4) en fonction de l'angle de lacet et de la direction de lacet,
notifier la troisième unité de puissance rotative (1, 2, 3, 4) de la vitesse de moteur correspondant à chaque propulseur de la troisième unité de puissance rotative (1, 2, 3, 4), et
notifier la quatrième unité de puissance rotative (1, 2, 3, 4) de la vitesse de moteur correspondant à chaque propulseur de la quatrième unité de puissance rotative (1, 2, 3, 4) ;
la troisième unité de puissance rotative (1, 2, 3, 4) est configurée pour contrôler un moteur de chaque propulseur de la troisième unité de puissance rotative (1, 2, 3, 4) en fonction de la vitesse de moteur correspondant audit propulseur de la troisième unité de puissance rotative (1, 2, 3, 4) ; et
la quatrième unité de puissance rotative (1, 2, 3, 4) est configurée pour contrôler un moteur de chaque propulseur dans la quatrième unité de puissance rotative (1, 2, 3, 4) en fonction des vitesses de moteur correspondant audit propulseur dans la quatrième unité de puissance rotative (1, 2, 3, 4).

5. L'aéronef selon l'une quelconque des revendications 1 à 2, dans lequel chaque propulseur comprend un moteur et une hélice, et/ou chaque propulseur est intégré sur l'une des ailes de l'aéronef.

6. L'aéronef selon la revendication 5, dans lequel le moteur est un moteur de propulsion sans arbre, et/ou le moteur est intégré avec l'hélice.
